# FASCICULE DE BREVET EUROPEEN

(11) **EP 2 436 601 B1**
(45) Date de publication et mention de la délivrance du brevet: **13.11.2013**
(21) Numéro de dépôt: 11182682.2
(22) Date de dépôt: 26.09.2011
(51) Int. Cl.: B64D 27/26

(54) **Dispositif de reprise de poussée a bielles pour mat d'accrochage d'un moteur d'aéronef, intégrant trois rotules alignées**
Vorrichtung zur Aufnahme der Schubkräfte eines Triebwerks mit drei in Reihe angeordneten Kugelgelenken
Thrust link device with connecting rods for an aircraft engine mounting, including three aligned ball-and-socket joints

(30) Priorité: 01.10.2010 FR 1057963
(43) Date de publication de la demande: 04.04.2012
(73) Titulaire: Airbus Operations, 31060 Toulouse (FR)
(72) Inventeur: Lafont, Laurent, 31320 Pechbusque (FR); Combes, Stéphane, 31660 Buzet sur Tarn (FR); Levert, Stéphane, Beijing 101312 (CN)
(74) Mandataire: Ilgart, Jean-Christophe

(56) Documents cités:
- EP-A1- 1 136 355
- FR-A1- 2 917 713

## Description

### DOMAINE TECHNIQUE

La présente invention se rapporte à un mât d'accrochage d'un moteur d'aéronef destiné à être interposé entre une voilure d'aéronef et le moteur concerné, et plus particulièrement à son dispositif de reprise des efforts de poussée du type comprenant deux bielles latérales.

Ce type de mât d'accrochage ou « EMS » (de l'anglais « Engine Mounting Structure »), permet de suspendre un moteur au-dessous de la voilure de l'aéronef, ou bien de monter ce turbomoteur au-dessus de cette même voilure.

L'invention peut être utilisée sur tout type d'aéronef équipé de préférence de turboréacteurs ou de turbopropulseurs.

### ETAT DE LA TECHNIQUE ANTERIEURE

Un tel mât d'accrochage est en effet prévu pour constituer l'interface de liaison entre un moteur et une voilure de l'aéronef. Il permet de transmettre à la structure de cet aéronef les efforts générés par son moteur associé, et autorise également le cheminement du carburant, des systèmes électriques, hydrauliques, et air entre le moteur et l'aéronef.

En référence à la figure 1, on voit un ensemble moteur pour aéronef, tel que connu du document WO 2009/037267. Cet ensemble moteur 1 est destiné à être fixé sous une aile 2 de cet aéronef. Il comporte un mât ou dispositif d'accrochage 4, ainsi qu'un moteur 6 tel qu'un turboréacteur accroché sous ce dispositif 4.

Globalement, le dispositif d'accrochage 4 comporte une structure rigide 8, également appelée structure primaire, portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que l'ensemble 1 est destiné à être entouré d'une nacelle (non représentée), et que le mât d'accrochage 4 comporte une autre série d'attaches (non représentées) rapportées sur la structure rigide 8 et permettant d'assurer la suspension de cet ensemble 1 sous la voilure 2 de l'aéronef.

Dans toute la description qui va suivre, par convention, on appelle X la direction longitudinale du mât 4 qui est également assimilable à la direction longitudinale du turboréacteur, cette direction X étant parallèle à un axe longitudinal 5 de ce turboréacteur 6. D'autre part, on appelle Y la direction orientée transversalement par rapport au mât 4 et également assimilable à la direction transversale du turboréacteur 6, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

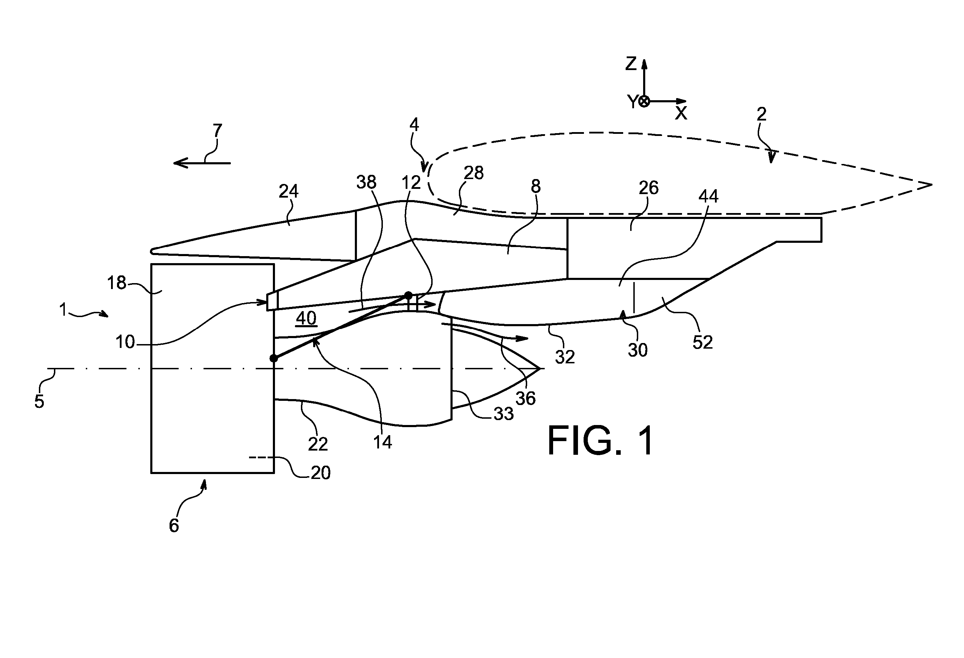

Sur la figure 1 représentant l'art antérieur, on peut donc voir les deux attaches moteur 10, 12, le dispositif de reprise des efforts de poussée 14, la structure rigide 8 du dispositif d'accrochage 4, ainsi qu'une pluralité de structures secondaires rapportées sur la structure rigide 8. Ces structures secondaires assurant la ségrégation et le maintien des systèmes tout en supportant des éléments de carénage aérodynamique seront décrites ci-après.

Il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 22 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière. L'attache moteur avant 10 est interposée entre une extrémité avant de la structure rigide 8, et une partie supérieure du carter de soufflante 18. L'attache moteur arrière 12 est quant à elle interposée entre la structure rigide 8 et le carter central 22, ou le carter d'éjection des gaz situé plus en arrière.

La structure rigide 8 permet d'assurer la transmission des efforts entre le turboréacteur et la voilure. Elle prend la forme d'un caisson s'étendant de l'arrière vers l'avant, sensiblement selon la direction X. Ce caisson métallique est alors classiquement formé par l'assemblage de longerons supérieurs et inférieurs et de panneaux latéraux raccordés entre eux par l'intermédiaire de nervures intérieures transversales de rigidification (non visibles sur la figure 1), qui prennent chacune la forme d'un rectangle orienté dans un plan YZ.

Toujours en référence à la figure 1, on compte parmi les structures secondaires du mât 4 une structure aérodynamique avant 24, une structure aérodynamique arrière 26, un carénage de raccordement 28 des structures aérodynamiques avant et arrière, et un carénage aérodynamique arrière inférieur 30, également appelé « bouclier » ou « APF » (de l'anglais « Aft Pylon Fairing »).

Plus précisément, la structure aérodynamique avant 24 est placée dans le prolongement avant inférieur de la voilure 2 et au-dessus de la structure primaire 8. Elle est montée fixement sur la structure rigide 8, et présente une fonction de profil aérodynamique entre une partie supérieure des capots de soufflante articulés sur celle-ci, et le bord d'attaque de la voilure. Cette structure aérodynamique avant 24 dispose alors non seulement d'une fonction de carénage aérodynamique, mais permet également la mise en place, la ségrégation et le cheminement de différents systèmes (air, électrique, hydraulique, carburant). De plus, la partie avant de cette structure 24 n'étant pas au contact de la structure rigide 8, il est habituellement interposé un échangeur thermique dans l'espace défini entre ces deux éléments.

Directement dans le prolongement arrière de cette structure 24, toujours sous la voilure et monté au-dessus de la structure rigide 8, se trouve le carénage de raccordement 28, également appelé « karman ». Ensuite, toujours vers l'arrière, le carénage de raccordement 28 est prolongé par la structure aérodynamique arrière 26, qui contient une partie des équipements du mât. Cette structure 26 est de préférence située entièrement en arrière par rapport à la structure rigide 8, et est donc attachée sous la voilure de l'aéronef.

Enfin, sous la structure rigide 8 et la structure aérodynamique arrière 26, se trouve le carénage aérodynamique arrière inférieur 30, également appelé « bouclier » ou « Aft Pylon Fairing ». Ses fonctions essentielles sont la formation d'une barrière thermique également dite anti-feu servant à protéger le mât et la voilure de la chaleur dégagée par le flux primaire, et la formation d'une continuité aérodynamique entre la sortie du moteur et le mât d'accrochage. De manière connue, le carénage 30 précité comporte un plancher de protection thermique 32 pourvu d'une surface extérieure destinée à être épousée par un flux primaire du moteur qu'il délimite partiellement radialement vers l'extérieur, ce flux primaire s'échappant de la tuyère 33 du moteur étant représenté schématiquement par la flèche 36. Par ailleurs, le carénage 30 comporte aussi deux panneaux latéraux 44 qui sont quant à eux prévus pour être épousés extérieurement par un flux secondaire du moteur représenté schématiquement par la flèche 38, en raison de leur implantation dans le canal annulaire 40 de flux secondaire du moteur, et/ou en sortie de celui-ci.

Il est noté que dans le mode de réalisation préféré décrit où le moteur 6 est destiné à être suspendu sous la voilure de l'aéronef, le plancher 32 de protection thermique du mât et de la voilure vis-à-vis du flux primaire 36, constitue une portion inférieure du carénage 30. Naturellement, ce plancher constitue une portion supérieure du carénage dans le cas alternatif où le moteur est destiné à être implanté au-dessus de la voilure.

Enfin, comme cela est visible sur la figure 1, il est prévu que l'extrémité avant du plancher 32 vienne épouser l'extrémité arrière supérieure de la tuyère 33, ou bien qu'elle soit fortement rapprochée de cette même extrémité arrière de tuyère 33.

Comme mentionné ci-dessus, le mât intègre un dispositif de reprise des efforts de poussée comprenant, tel que cela est notamment divulgué dans le document WO 2007/000456, et EP-A-1136355 deux bielles latérales agencées symétriquement l'une par rapport à l'autre. L'une des extrémités de chaque bielle est montée articulée sur un palonnier, lui-même monté articulé sur une ferrure solidaire de la structure rigide du mât d'accrochage. L'autre extrémité de chaque bielle est montée sur le carter du moteur, de préférence sur le carter intermédiaire.

Bien que largement répandue, cette conception peut être améliorée, en particulier en termes d'encombrement.

### EXPOSE DE L'INVENTION

L'invention a donc pour but de remédier au moins partiellement à l'inconvénient mentionné ci-dessus, relatif aux réalisations de l'art antérieur.

Pour ce faire, l'invention a pour objet un dispositif de reprise des efforts de poussée pour mât d'accrochage de moteur d'aéronef, ledit dispositif comprenant une première ferrure destinée à être solidaire d'une structure rigide du mât d'accrochage, ainsi que deux bielles latérales de reprise des efforts de poussée.

Selon l'invention, il comprend en outre un système d'axe portant trois premiers organes mâles de rotule agencés le long de celui-ci et appartenant respectivement à une rotule primaire et deux rotules secondaires agencées de part et d'autre de ladite rotule primaire, lesdits premiers organes mâles étant glissés autour du système d'axe, ladite première ferrure intégrant un second organe femelle de rotule coopérant avec ledit premier organe de ladite rotule primaire, et une extrémité de chacune des deux bielles intégrant un second organe femelle de rotule coopérant respectivement avec lesdits premiers organes des deux rotules secondaires.

L'invention est remarquable en ce qu'elle propose une conception de dispositif de reprise des efforts de poussée différant radicalement des conceptions antérieures, basées sur l'utilisation d'un palonnier. Ce palonnier est en effet supprimé au profit d'un système d'axe, de préférence orienté transversalement, portant trois rotules dont les deux situées latéralement permettent le raccordement des bielles. Préférentiellement, le système d'axe traverse trois alésages coaxiaux pratiqués respectivement dans les trois premiers organes mâles de rotule.

Il en résulte une diminution de l'encombrement global du dispositif de reprise, qui s'accompagne d'une réduction de sa masse. Avec cet encombrement réduit du dispositif de reprise des efforts de poussée, en particulier selon la direction de la hauteur selon laquelle le moteur et la structure rigide du mât sont superposés, ces deux éléments peuvent être rapprochés l'un de l'autre, et la garde au sol peut ainsi avantageusement être augmentée. Alternativement, la garde au sol peut être conservée, et la hauteur de la structure rigide augmentée, pour l'obtention d'une plus grande résistance mécanique de celle-ci.

De préférence, les centres des rotules primaire et secondaires sont alignés.

De préférence, le dispositif comprend également deux secondes ferrures destinées à être solidaires de la structure rigide du mât d'accrochage, les secondes ferrures étant agencées de sorte que chaque rotule secondaire se trouve agencée entre l'une de ces secondes ferrures et la rotule primaire, selon la direction du système d'axe, et chaque seconde ferrure est traversée avec jeu par ledit système d'axe.

Du fait de la présence des jeux, aucun effort ne transite par les secondes ferrures en configuration normale. En revanche, en cas de défaillance survenant sur le chemin d'efforts entre l'une des bielles et le système d'axe, comme par exemple la rupture de la bielle, les efforts de poussée ne transitant plus que par l'autre bielle sont alors introduits dans la structure rigide via la première ferrure, et via la seconde ferrure associée à la bielle encore active, après que le jeu entre le système d'axe et cette seconde ferrure ait été consommé. Les efforts de poussée se répartissant entre les deux ferrures précitées impliquent qu'aucune d'elles ne doit être surdimensionnée. Il en résulte un gain en termes de masse et d'encombrement dans la manière d'assurer la fonction de sécurité, dite « Fail Safe ».

De préférence, l'autre extrémité des bielles latérales de reprise des efforts de poussée est destinée à être raccordée au moteur, préférentiellement sur le carter intermédiaire de celui-ci.

L'invention a également pour objet un mât d'accrochage de moteur d'aéronef comprenant une structure rigide ainsi qu'un dispositif de reprise des efforts de poussée tel que décrit ci-dessus.

L'invention a également pour objet un ensemble moteur pour aéronef comprenant un mât d'accrochage de moteur tel que décrit ci-dessus, ainsi qu'un moteur fixé sur ledit mât, de préférence du type turboréacteur ou turbopropulseur.

Enfin, l'invention concerne un aéronef comprenant au moins un ensemble moteur tel que décrit ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà décrite, représente une vue schématique de côté d'un ensemble moteur pour aéronef, comprenant un mât d'accrochage classique de l'art antérieur ;
- la figure 2 représente une vue éclatée en perspective d'un ensemble moteur pour aéronef, selon un mode de réalisation préféré de la présente invention ;
- la figure 2a représente une vue en coupe transversale de la structure rigide du mât d'accrochage équipant l'ensemble montré sur la figure 2, la coupe passant à travers l'une des nervures transversales de rigidification ;
- les figures 2b et 2c représentent des vues similaires à celle de la figure 2a, sur lesquelles la structure rigide se présente sous la forme de deux alternatives de réalisation, respectivement ;
- la figure 3 représente une vue de face d'une partie avant de la structure rigide du mât, sur laquelle l'attache moteur avant est conçue selon une alternative de réalisation ;
- la figure 4 représente une partie de la structure rigide du mât, sur laquelle l'attache moteur arrière est conçue selon une alternative de réalisation ;
- la figure 5 représente une partie de la structure rigide du mât, sur laquelle les attaches voilure avant sont conçues selon une alternative de réalisation ;
- la figure 5a représente une vue de dessus d'une partie de la structure rigide du mât et de la voilure, sur laquelle les attaches voilure avant sont conçues selon une autre alternative de réalisation ;
- la figure 5b représente une vue en coupe prise le long de la ligne Vb-Vb de la figure 5a ;
- la figure 5c représente une vue de côté de celle montrée sur la figure 5a ;
- la figure 6 représente une vue agrandie de dessus du dispositif de reprise des efforts de poussée de l'ensemble moteur montré sur les figures précédentes ;
- la figure 7 représente une vue en coupe prise le long de la ligne VII-VII de la figure 6 ; et
- la figure 8 représente une vue similaire à celle de la figure 6, sur laquelle le dispositif de reprise des efforts de poussée a été montré dans une configuration telle qu'adoptée après la rupture accidentelle de l'une de ses deux bielles latérales.

### EXPOSÉ DÉTAILLÉ DE MODES DE RÉALISATION PRÉFÉRÉS

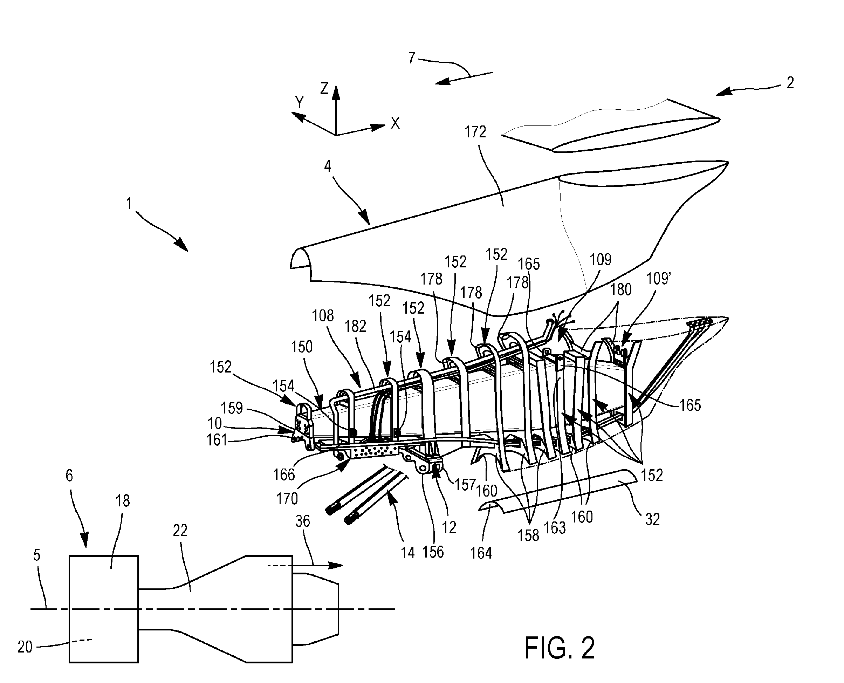

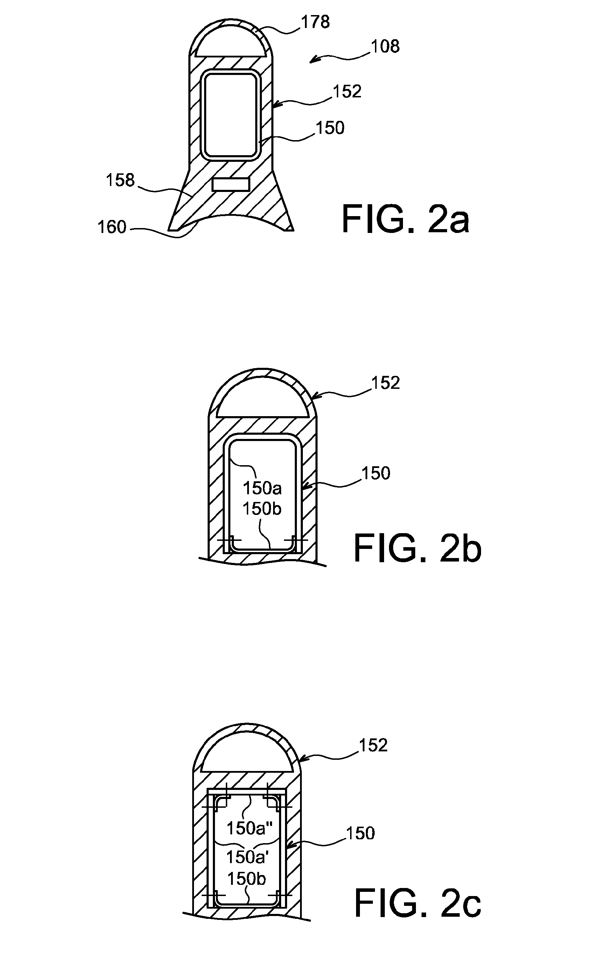

En référence à la figure 2, on voit de façon éclatée un ensemble moteur 1 pour aéronef destiné à être fixé sous une aile 2 de cet aéronef, cet ensemble 1 comportant un dispositif d'accrochage 4 selon un mode de réalisation préféré de la présente invention, ainsi qu'un moteur 6 tel qu'un turboréacteur accroché sous ce dispositif 4.

Dans cet ensemble 1, certains éléments sont identiques ou similaires à ceux de l'ensemble de l'art antérieur montrés sur la figure 1. A cet égard, sur les figures, les éléments portant les mêmes références correspondent à des éléments identiques ou similaires.

Le mât d'accrochage 4 comporte une structure rigide 108, également appelée structure primaire, portant des moyens d'accrochage du moteur 6, ces moyens d'accrochage disposant d'une pluralité d'attaches moteur 10, 12 (chacune montrée en partie seulement sur la figure 2), ainsi que d'un dispositif de reprise des efforts de poussée 14 générés par le moteur 6.

A titre indicatif, il est noté que l'ensemble 1 est destiné à être entouré d'une nacelle (non représentée), et que le mât d'accrochage 4 comporte une autre série d'attaches 109, 109' rapportées sur la structure rigide 108 et permettant d'assurer la suspension de cet ensemble 1 sous l'aile/voilure 2 de l'aéronef. Chacune des attaches voilure 109, 109' est également montrée seulement en partie sur la figure 2.

Les attaches moteur 10, 12 du mât 4 sont prévues au nombre de deux, et respectivement dénommées attache moteur avant et attache moteur arrière. L'attache moteur avant 10 est interposée entre une extrémité avant de la structure rigide 108 et une partie supérieure du carter de soufflante 18, tandis que l'attache moteur arrière 12 est quant à elle interposée entre la structure rigide 8 et le carter central 22, ou le carter d'éjection situé plus en arrière.

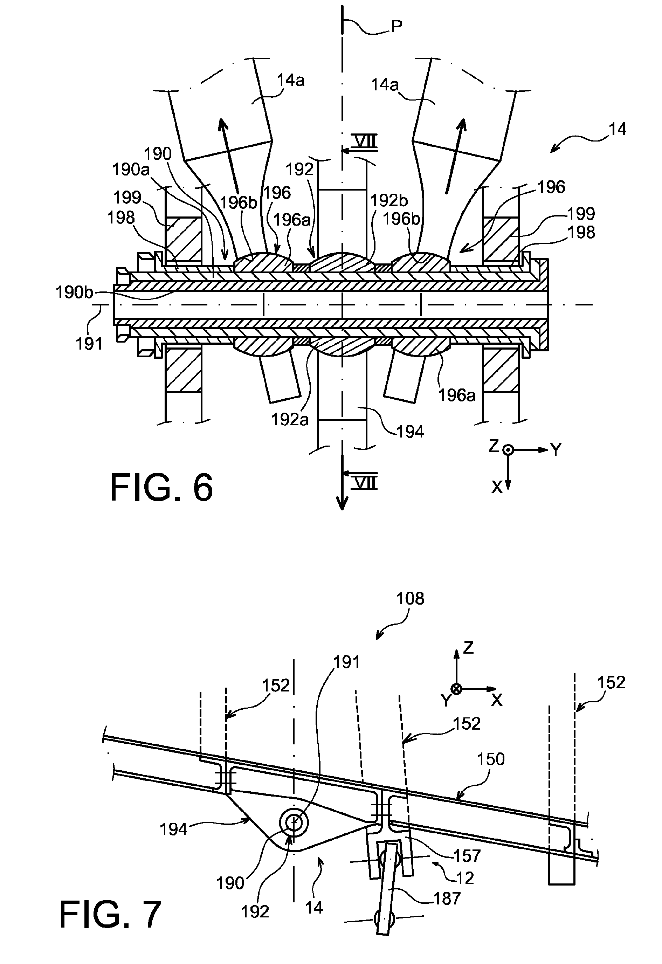

En outre, le dispositif de reprise des efforts de poussée 14, également objet de l'invention, comprend globalement un système d'axe portant trois rotules raccordant les bielles à la structure rigide 108, comme cela sera détaillé ultérieurement, en référence aux figures 6 à 8.

Dans ce mode de réalisation préféré de la présente invention, la structure rigide 108 comprend tout d'abord un caisson 150 s'étendant globalement selon la direction X. Le caisson est formé à partir d'un unique tronçon creux réalisé d'une seule pièce en matériau composite, du type mélange de résine et de fibre de carbone et/ou de verre, par exemple du CFRP (de l'anglais « Carbon Fiber Reinforced Plastic »).

La fabrication de ce type de caisson peut être aisée et variée. Elle consiste par exemple à agencer des plis de matériau composite sur un moule mâle, puis à placer l'ensemble de plis à l'intérieur d'un moule femelle léger, qui assurera une forme précise à la surface extérieure du caisson. Celui-ci est obtenu par l'application d'une pression fluidique depuis l'intérieur du caisson, qui remplit le rôle de force de compactage contre la surface intérieure du caisson placé dans un four approprié.

Naturellement, l'empilement de plis peut inclure des raidisseurs, localisés à des endroits prédéterminés du caisson, dont la surface intérieure ne requiert aucune finition particulière. Des raidisseurs thermoplastiques peuvent également être adjoints sur le caisson après la formation de celui-ci, sur sa surface extérieure et/ou sa surface intérieure. Néanmoins, il est de préférence prévu que l'intérieur du caisson 150 reste vide. Il est en particulier dépourvu de nervures transversales de rigidification qui, ici, sont prévues à l'extérieur du caisson, comme cela sera détaillé ci-après.

Le caisson 150 présente une section transversale de forme sensiblement carrée ou rectangulaire, avec des angles pouvant être légèrement arrondis, ce qui facilite sa réalisation en matériau composite. De plus, comme cela sera évoqué ci-après, des nervures transversales de rigidification entourent et épousent la surface extérieure du caisson. Par conséquent, des nervures incorporant un cadre sensiblement carré/rectangulaire qui épouse le caisson peuvent alors présenter des zones renforcées au niveau de leurs coins, puisque ceux-ci peuvent incorporer de la matière pour combler les espaces extérieurs laissés vides par les angles arrondis du caisson. La rigidité des nervures s'en trouve renforcée.

Comme on peut l'apercevoir sur la figure 2, le caisson 150 présente une section de grandeur maximale au niveau des deux attaches voilure avant 109, 109 qu'il porte. A partir de cette région de grandeur maximale, le caisson s'étend longitudinalement à la fois sur une petite distance vers l'arrière, et sur une distance plus importante vers l'avant, avec une section de grandeur qui faiblit, et bien entendu d'un seul tenant, même si deux tronçons longitudinaux pourraient être envisagés, sans sortir du cadre de l'invention.

Comme évoqué ci-dessus, la structure rigide 108 est complétée par une pluralité de nervures transversales 152 de rigidification du caisson, fixées extérieurement sur le caisson 150 qu'elles entourent en épousant sa surface extérieure. De plus, elles sont espacées les unes des autres selon la direction X.

Chacune des ces nervures 152, orientée dans un plan YZ, présente de préférence un cadre de forme carrée/rectangulaire dont les quatre côtés épousent respectivement les montants supérieur et inférieur ainsi que les deux flancs latéraux du caisson. De cette façon, chacune d'elles entoure le tronçon unique de caisson, sur lequel elles sont fixées par soudage, boulonnage, ou par toute autre technique classique à la disposition de l'homme du métier. Avant sa fixation sur le caisson, chaque nervure 152 est insérée depuis une extrémité de section réduite du caisson, puis déplacée par rapport à ce dernier jusqu'à ce que son cadre vienne en appui sur la surface extérieure du caisson, à son emplacement définitif. A ce stade, avant ou après la fixation de la nervure sur le caisson, celui-ci peut être réajusté thermoplastiquement pour permettre un assemblage correct sur la nervure, en étant reconformé à chaud directement sur la nervure transversale extérieure.

Bien que faisant partie intégrante de la structure primaire 108, les nervures 152, de préférence métalliques, sont astucieusement utilisées pour le support d'un ou plusieurs autres équipements du mât, ou de la nacelle destinée à entourer le moteur. Elles présentent donc des moyens de support de ces équipements, de préférence réalisés d'un seul tenant avec les nervures.

Ainsi, on peut voir que deux des nervures avant 152 présentent, au niveau des côtés latéraux de leur cadre, des moyens de support 154 de capots articulés de nacelle (non représentés), ces moyens 154 prenant la forme de ferrures percées selon la direction X afin de pouvoir loger des charnières appropriées.

L'une des nervures avant 152 présente, au niveau du côté inférieur de son cadre, des moyens de support 156 de l'attache moteur arrière 12. Ces moyens 156 prennent la forme d'une platine de support orientée vers le bas, sur laquelle est boulonnée une ferrure 157 faisant partie intégrante de l'attache moteur arrière 12. De façon connue de l'homme du métier, l'attache moteur arrière est complétée par une autre ferrure (non représentée) solidaire du carter central 22 du moteur ou réalisée d'un seul tenant avec celui-ci, reliée à la ferrure 157 par le biais de biellettes et/ou manilles articulées sur chacune des deux ferrures.

De manière analogue, la nervure 152 la plus en avant présente, au niveau du côté inférieur de son cadre, des moyens de support 159 de l'attache moteur avant 10. Ces moyens 159 prennent la forme d'une platine de support orientée vers le bas, sur laquelle est boulonnée une ferrure 161 faisant partie intégrante de l'attache moteur avant 10. De façon connue de l'homme du métier, l'attache moteur avant est complétée par une autre ferrure (non représentée) solidaire du carter de soufflante 18 du moteur ou réalisée d'un seul tenant avec celui-ci, reliée à la ferrure 159 par le biais de biellettes et/ou manilles articulées sur chacune des deux ferrures.

En outre, le caisson 150 supporte, au niveau de sa section de grandeur maximale, une nervure 152 équipée de moyens de support 163 des deux attaches voilure avant 109, 109. Ces moyens 163 prennent, pour chacune des deux attaches 109, 109 agencées sensiblement symétriquement de part et d'autre d'un plan vertical et longitudinal médian du caisson 150, la forme d'une platine de support orientée latéralement, et correspondant à la partie supérieure de l'un des côtés latéraux du cadre de la nervure 152. Sur chacune des deux platines 163 est boulonnée une ferrure 165 faisant partie intégrante de l'attache voilure avant concernée. De façon connue de l'homme du métier, chaque attache voilure avant 109 est complétée par une autre ferrure (non représentée) solidaire d'un longeron avant d'aile ou réalisée d'un seul tenant avec celui-ci, reliée à la ferrure 165 par le biais de biellettes et/ou manilles articulées sur chacune des deux ferrures.

En outre, plusieurs nervures arrière 152 présentent, au niveau du côté inférieur de leur cadre, des moyens de support 158 d'un plancher de protection thermique 32. Ces moyens prennent la forme d'une extension de nervure vers le bas, qui se termine par une surface convexe 160 de réception du plancher 32 de forme complémentaire, dont la surface extérieure 164 est destinée à être épousée par un flux primaire 36 du moteur. Avec cet agencement, le carénage 30 employé dans l'art antérieur, dit APF, n'est avantageusement plus requis.

Les nervures 152 présentent aussi, au niveau du côté inférieur de leur cadre, des moyens de support 166 d'un système ventilé 170 de protection thermique du caisson. Ces moyens 166 peuvent prendre différentes formes, comme par exemple celle d'une platine de fixation, sur laquelle est monté le système ventilé 170 prenant globalement la forme d'un conduit s'étendant longitudinalement d'un bout à l'autre du caisson, sous le montant inférieur de celui-ci. Ce conduit peut d'ailleurs traverser l'extension de nervure inférieure 158 d'une ou plusieurs nervures arrière 152, comme cela est montré sur la figure 2.

En étant traversé par un fluide frais en circulation vers l'aval, ce conduit, connu en soi, remplit donc une fonction de protection thermique du caisson vis-à-vis de la chaleur dégagée par le moteur.

Enfin, les nervures 152 présentent des moyens de support d'une peau aérodynamique du mât, référencée 172 sur la figure 2. Ces moyens de support correspondent aux chants des nervures, qui offrent une surface de support de la peau 172. Dans le mode de réalisation préféré représenté, la peau 172, éventuellement obtenue par l'assemblage de panneaux, est prévue pour constituer la surface aérodynamique de tous les carénages aérodynamiques rencontrés dans l'art antérieur montrés sur la figure 1, à savoir la structure aérodynamique avant 24, la structure aérodynamique arrière 26, le carénage de raccordement 28 et le carénage aérodynamique arrière inférieur 30. La peau 172 est donc prévue pour recouvrir, à distance, l'intégralité du montant supérieur et des flancs latéraux du caisson 150.

Ainsi, les nervures avant présentent une extension supérieure 178 de forme bombée vers l'extérieur, dite en arche, pour correspondre à la forme identique des parties supérieures de la structure aérodynamique avant 24 et de la portion avant du carénage de raccordement 28. Les nervures arrière présentent quant à elles une extension supérieure 180 de forme bombée vers l'intérieur, dite creusée, pour correspondre à la forme identique des parties supérieures de la structure aérodynamique arrière 26 et de la portion arrière du carénage de raccordement 28. Comme on peut le voir sur la figure 2, l'extension supérieure 178 des nervures avant 152 est concave pour la réception de la partie de peau 172 de forme complémentaire, tandis que l'extension supérieure 180 des nervures arrière 152 est convexe pour la réception de la partie de peau 172 de forme complémentaire, ou pour la réception directe de la surface d'intrados de l'aile 2 de forme complémentaire.

En outre, l'extension supérieure 178 des nervures avant, en forme d'arche, peut être traversée par un conduit du mât, par exemple un conduit 182 d'échangeur thermique, cheminant le long du montant supérieur du caisson 150.

Sur la figure 2a, on peut voir le caisson 150 réalisé d'une seule pièce en matériau composite, de section transversale de forme sensiblement rectangulaire, avec des angles arrondis. Chaque nervure 152 épouse, avec son cadre, la surface extérieure de ce caisson, sur tout le pourtour de celle-ci. En d'autres termes, le cadre de la nervure définit intérieurement une surface de contact suivant une ligne fermée, sur laquelle le caisson est en contact, et sur laquelle il peut être reconformé à chaud après sa fabrication, grâce à ses propriétés thermoplastiques.

Comme on le voit sur la figure 2a, les quatre coins du cadre de la nervure disposent d'une résistance mécanique renforcée, due à la présence de matière comblant les espaces laissés libres par les angles arrondis du caisson, épousés par ces coins de cadre. C'est avantageusement l'ensemble de la nervure qui voit sa résistance mécanique accrue.

Sur la figure 2b, on voit une première alternative de réalisation pour la fabrication du caisson 150, qui n'est plus réalisé d'un seul tenant, mais obtenu à partir de l'assemblage d'un longeron inférieur 150b en alliage de titane, et d'une structure supérieure en U 150a réalisée d'un seul tenant en matériau composite. Ici, la structure en U forme donc le montant supérieur du caisson, ainsi que ses flancs latéraux. Le longeron inférieur 150b formant le montant inférieur du caisson, permet, grâce à l'alliage de titane, de mieux résister à la chaleur dégagée par le moteur en regard duquel il se trouve. L'assemblage de la structure supérieure en U 150a sur le longeron inférieur 150b peut s'effectuer de manière classique, par exemple par boulonnage.

La figure 2c représente une seconde alternative de réalisation, issue de la première puisqu'elle consiste à réaliser la structure supérieure en U à l'aide deux panneaux latéraux 150a' et d'un longeron supérieur 150a" fixés entre-eux, et chacun réalisé en matériau composite.

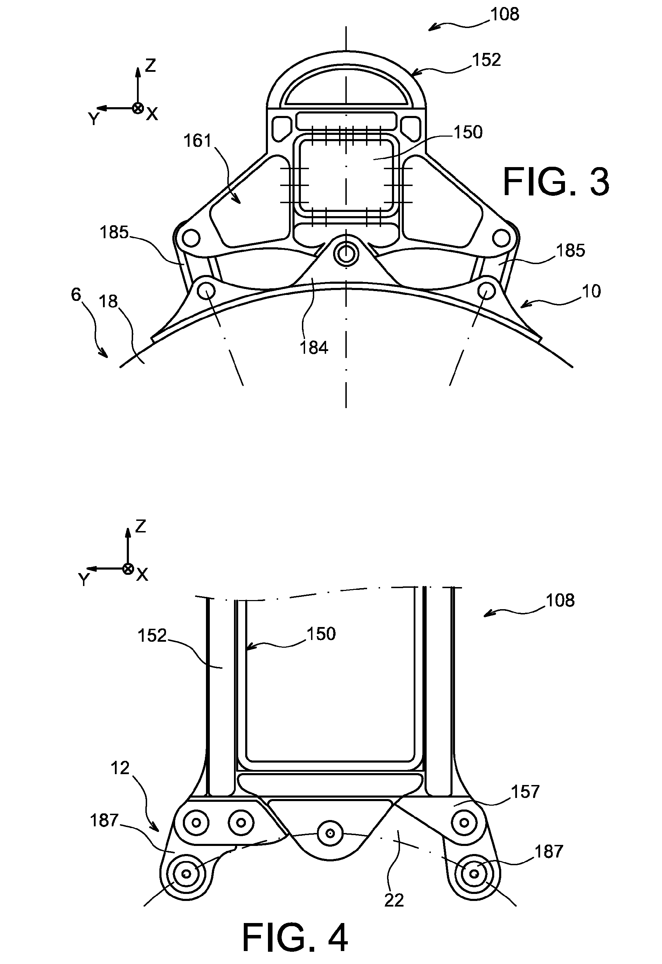

En référence à présent à la figure 3, il est représenté une partie avant de la structure rigide du mât, sur laquelle l'attache moteur avant 10 est conçue selon une alternative de réalisation. En effet, il est ici prévu que la nervure 152 la plus avant de la structure rigide soit réalisée d'un seul tenant avec la ferrure 161 formant partie de l'attache moteur 10. Cette ferrure 161 s'étend latéralement de part et d'autre du cadre de nervure 152, et également vers le bas à partir du côté inférieur de ce cadre. Elle porte une pluralité de biellettes/manilles 185 qui sont montées à l'une de leurs extrémités, de préférence de manière articulée, sur cette ferrure 161, et qui sont montées à l'autre de leurs extrémités, de préférence également articulées, sur une autre ferrure 184 solidaire d'une partie supérieure du carter de soufflante 18, ou réalisée d'un seul tenant avec ce dernier. Ici, ce sont deux biellettes/manilles 185 qui sont prévues, respectivement montées aux extrémités latérales de l'attache 10. En outre, la partie centrale de la ferrure 161 est également montée articulée sur une partie centrale de la ferrure 184. Ce montage est de préférence du type « en attente », à savoir que les efforts ne transitent pas en configuration normale, mais seulement en configuration de secours lorsque l'une des deux parties latérales de l'attache 10 est endommagée. Cette partie centrale remplit donc une fonction dite de sécurité, également dénommée « Fail Safe ». Les axes d'articulation sont ici orientés selon la direction X.

De manière analogue, en référence à présent à la figure 4, il est représenté une partie de la structure rigide, sur laquelle l'attache moteur arrière 12 est conçue selon une alternative de réalisation. En effet, il est ici prévu que l'une des nervures 152 soit réalisée d'un seul tenant avec la ferrure 157 formant partie de l'attache moteur 12. Cette ferrure 157 s'étend essentiellement vers le bas à partir du côté inférieur du cadre de nervure 152. Elle porte une pluralité de biellettes/manilles 187 qui sont montées à l'une de leurs extrémités, de préférence de façon articulée, sur cette ferrure 157, et qui sont montées à l'autre de leurs extrémités, de préférence également articulées, sur une autre ferrure (non représentée) solidaire d'une partie supérieure du carter central 22, ou réalisée d'un seul tenant avec ce dernier. Ici, ce sont deux biellettes/manilles 187 qui sont prévues, respectivement montées aux extrémités latérales de l'attache 12. En outre, la partie centrale de la ferrure 157 est également montée articulée sur une partie centrale de la ferrure rapportée sur le carter 22. Ce montage est de préférence du type « en attente », à savoir que les efforts ne transitent pas en configuration normale, mais seulement en configuration de secours lorsque l'une des deux parties latérales de l'attache 10 est endommagée. Cette partie centrale remplit donc ici aussi une fonction « Fail Safe ». Les axes d'articulation sont orientés selon la direction X.

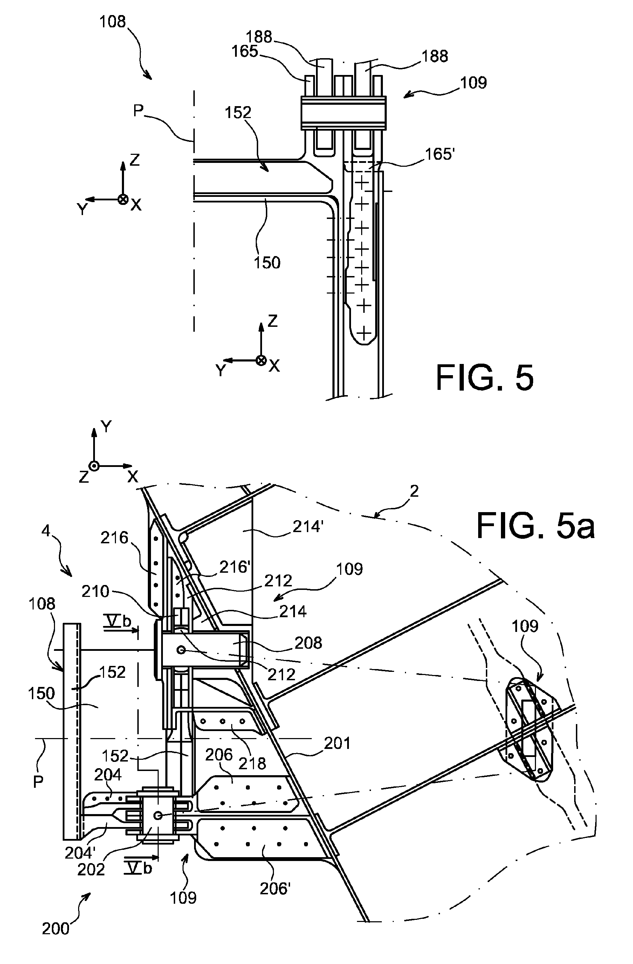

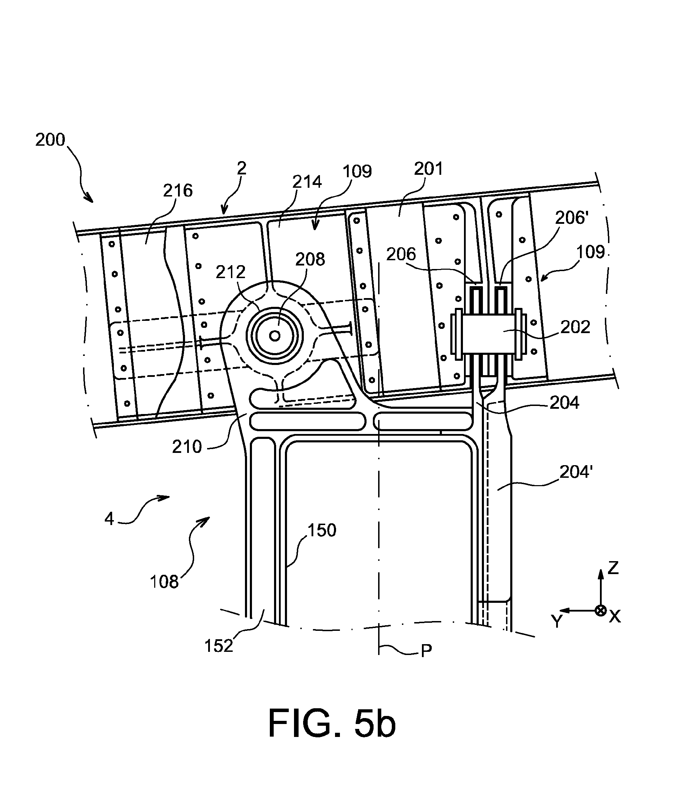

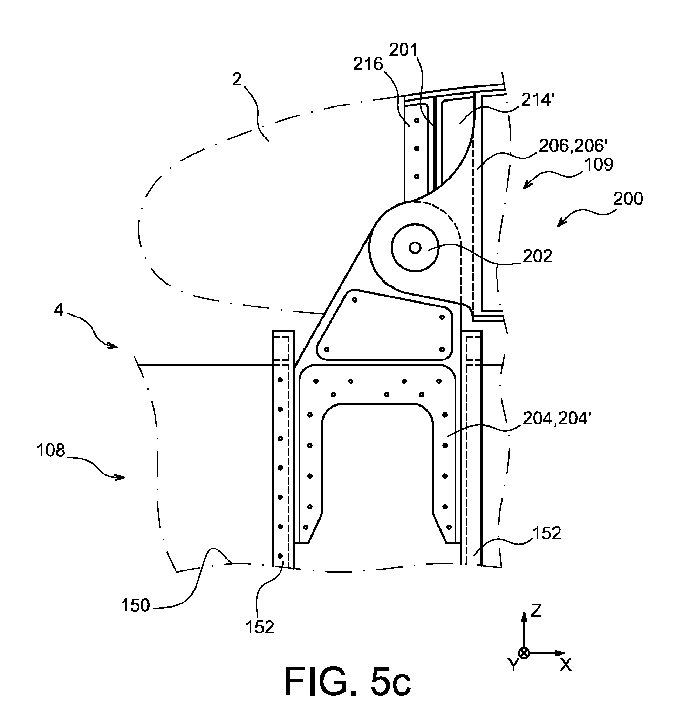

Sur la figure 5, il est montré une partie de la structure rigide 108 du mât, sur laquelle les attaches voilure avant sont conçues selon une alternative de réalisation. Sur cette figure, seule l'une des deux attaches voilure avant 109 a été représentée. Néanmoins, il doit être compris que l'autre attache 109 présente une conception symétrique, selon le plan vertical et longitudinal médian du mât et de la structure rigide, référencé P.

Ici, l'attache voilure avant 109 est conçue selon une alternative de réalisation. En effet, il est ici prévu que l'une des nervures 152 soit réalisée d'un seul tenant avec la ferrure 165 formant partie de l'attache 109. Cette ferrure 165 s'étend essentiellement vers le haut depuis un coin entre un côté latéral et le côté supérieur du cadre de nervure 152. Elle forme une chape sur laquelle est montée une biellette/manille 188 qui est montée à l'une de ses extrémités, de préférence de façon articulée, sur cette chape, et qui est montée à l'autre de ses extrémités, de préférence également articulée, sur une autre ferrure (non représentée) solidaire d'un longeron avant de l'aile, ou réalisée d'un seul tenant avec ce dernier. Les axes d'articulation sont ici orientés selon la direction Y.

Pour des questions de sécurité, la ferrure 165 réalisée d'une seule pièce avec la nervure 152 est doublée par une autre ferrure 165', qui lui est superposée selon la direction Y. Une biellette/manille 188 relie alors cette ferrure 165' en forme de chape à la ferrure de la voilure d'une manière analogue à celle retenue pour la ferrure 165, décrite ci-dessus. D'ailleurs, un même axe d'articulation peut traverser les deux chapes logeant les manilles 188, comme cela a été représenté sur la figure 5. Enfin, il est indiqué que la ferrure additionnelle 165', plaquée contre la ferrure 165, est de préférence fixée par boulonnage sur le côté latéral du cadre de nervure 152 intégrant cette même ferrure 165.

Ainsi, en cas de rupture de l'une des deux ferrures 165, 165', l'autre remplit une fonction « Fail Safe » en assurant le passage des efforts en direction de la voilure.

En référence à présent aux figures 5a à 5c, il est montré un assemblage 200 comprenant le mât 4 et l'aile 2, assemblage dans lequel les deux attaches voilure avant 109 sont réalisées selon encore une autre alternative.

Ici, les moyens d'accrochage de la structure rigide 108 sur l'aile 2 sont constitués par les deux attaches voilure avant 109, et par l'attache voilure arrière 109'. Cette dernière, qui est raccordée sur une partie de l'aile agencée en arrière par rapport au longeron avant d'aile 201, présente une forme conventionnelle, du type constituée par l'assemblage des ferrures et de manilles/biellettes. Elle ne sera donc pas davantage décrite.

Les deux attaches avant 109, 109 ne sont en revanche plus symétriques, mais toujours disposées de part et d'autre d'un plan vertical et longitudinal médian P du mât. Elles sont préférentiellement traversées par un même plan fictif transversal du mât.

Pour ce qui concerne la première attache avant 109, celle du bas sur la figure 5a, elle présente un premier pion de cisaillement 202 orienté selon la direction Y. Elle intègre également une ferrure de mât 204 rapportée sur un flan latéral du caisson 150, entre deux nervures 152, et fait saillie vers le haut depuis le montant supérieur du caisson. La partie en saillie, orientée dans un plan XZ, définit un orifice traversé par le pion 202. Comme cela est montré sur les figures 5a à 5c, pour des raisons de sécurité, la ferrure de mât 204 peut être doublée par une ferrure de mât additionnelle 204', qui remplit donc une fonction « Fail Safe ». La ferrure 204' est par exemple fixée superposée sur la ferrure 204, selon la direction Y. Elle est également traversée par le pion 202. L'une et/ou l'autre de ces ferrures 204, 204' sont préférentiellement également fixées sur les côtés latéraux des cadres des deux nervures entre lesquelles elles se situent, comme cela est le mieux visible sur la figure 5c.

En outre, cette attache voilure avant comporte une ferrure d'aile 206, sensiblement orientée dans un plan XZ, et rapportée fixement sur le longeron avant 201. Elle fait donc saillie vers l'avant par rapport à ce dernier, jusqu'à une extrémité avant en forme de chape logeant l'extrémité arrière de la ferrure de mât 204, et étant également traversée par le pion 202. Ici aussi, pour des raisons de sécurité, la ferrure d'aile 206 peut être doublée par une ferrure d'aile additionnelle 206', qui remplit donc une fonction « Fail Safe ». La ferrure 206' est par exemple fixée superposée sur la ferrure 206, selon la direction Y. Son extrémité avant en forme de chape, qui loge l'extrémité arrière de la ferrure 204', est également traversée par le pion 202.

Pour ce qui concerne la seconde attache avant 109, celle du haut sur la figure 5a, elle présente un second pion de cisaillement 208 orienté selon la direction X. Elle intègre également une ferrure de mât 210 solidaire de la structure rigide, qui est préférentiellement réalisée d'une seule pièce avec l'une des nervures de rigidification 152. En effet, cette ferrure 210 percée d'un orifice traversé par le pion 208 s'étend à partir du côté supérieur du cadre de la nervure 152, dans un plan YZ. Elle porte par ailleurs une rotule 212 établissant la liaison mécanique avec le pion de cisaillement 208.

L'attache 109 comporte aussi une ferrure de logement du pion 214 solidaire du longeron avant 201. Elle est fixée sur le longeron avant 201 par boulonnage, à l'avant de celui-ci. Elle présente donc une surface arrière d'appui sur le longeron 201, qui est inclinée selon une même direction que ce dernier, c'est-à-dire incliné à la fois selon les directions X et Y. De plus, elle présente une surface avant s'inscrivant dans un plan YZ faisant face à la ferrure de mât 210. Elle est traversée par un orifice de logement de pion, permettant d'encastrer ce pion dans la ferrure 214.

Ainsi, cette ferrure de logement de pion 214 est agencée entre le longeron avant 201 et la ferrure de mât 210, selon la direction X. Pour des raisons de sécurité, il est également prévu une ferrure additionnelle de logement du pion 214', visible sur la figure 5a. Elle est solidaire du longeron avant 201, boulonnée sur celui-ci de sorte que ce longeron soit situé entre les deux ferrures 214, 214'. Par ailleurs, elle présente un orifice de logement de pion se situant dans la continuité de l'orifice pratiqué dans le longeron 201, lui-même situé dans la continuité de l'orifice de la ferrure 214. Le pion 208 traverse donc successivement la ferrure de logement du pion 214, le longeron avant 201, et la ferrure additionnelle de logement du pion 214'. Par conséquent, en cas de défaillance de la ferrure 214, les efforts transitant par le pion 208 peuvent être transmis au longeron avant d'aile par l'intermédiaire de la ferrure additionnelle de logement du pion 214', qui remplit une fonction de sécurité, dite « Fail Safe ». Il doit donc être considéré que le pion 208 est engagé dans chacune des ferrures 214, 214'.

Pour éviter la mise en porte-à-faux du pion 208 sur la ferrure 214, il est également prévu une ferrure de maintien du pion 216 agencée de telle sorte que la ferrure de mât 210 soit située entre la ferrure de logement du pion 214 et la ferrure de maintien du pion 216. La ferrure 216 est orientée sensiblement dans un plan YZ, parallèlement à la ferrure de mât 210 à laquelle elle fait face. Elle est fixée au longeron avant 210 directement à l'une de ses extrémités, de préférence par boulonnage, et indirectement à l'autre de ses extrémités, par l'intermédiaire d'une ferrure de liaison 218. Cette dernière, qui est préférentiellement orientée sensiblement selon la direction X, est prévue pour compenser l'inclinaison du longeron avant 201 selon la direction Y. Ainsi, les ferrures 216, 218 et le longeron avant 201 forment un triangle rectangle dans lequel s'inscrivent les ferrures 210, 214, et qui est traversé par le pion 208 cheminant successivement à travers la ferrure 216, la ferrure 210, la ferrure 214, le longeron 201 et la ferrure 216'. A cet égard, il est indiqué que la ferrure 216 peut également être doublée par une ferrure de maintien de pion additionnelle 216', toujours pour des raisons de sécurité. Cette ferrure 216' est alors fixée superposée sur la ferrure 216, selon la direction X.

Avec ces différents agencements, l'attache voilure avant 109 du bas permet d'assurer la reprise des efforts s'exerçant selon les directions X et Z, tandis que celle du haut permet d'assurer la reprise des efforts s'exerçant selon les directions Y et Z. En outre, l'attache voilure arrière 109' permet elle aussi d'assurer la reprise des efforts s'exerçant selon les directions Y et Z. Par conséquent, ces trois attaches voilure qui composent les moyens d'accrochage permettant une reprise d'efforts isostatique.

En référence à présent aux figures 6 et 7, on peut apercevoir plus en détail la réalisation du dispositif de reprise des efforts de poussée 14, qui ne comprend plus de palonnier comme cela était le cas dans les réalisations de l'art antérieur.

Le dispositif 14 conserve néanmoins deux bielles latérales de reprise des efforts de poussées, référencées 14a, agencées symétriquement par rapport au plan vertical et longitudinal médian P du mât. Ces deux bielles 14a cheminent classiquement vers l'avant et vers le haut à partir du carter intermédiaire du moteur sur lequel leur extrémité avant est montée, de préférence de façon articulée. Toujours de manière connue, les axes d'articulation des bielles 14a sur le carter intermédiaire sont chacun sensiblement perpendiculaires au plan commun dans lequel s'inscrivent les deux bielles.

Le dispositif 14 comprend un système d'axe 190, orienté selon la direction Y, sous le montant inférieur du caisson 150. Ce système d'axe comprend par exemple deux axes concentriques 190a, 190b, comme cela est schématisé sur la figure 6. Ce doublage de l'axe permet d'obtenir une fonction de sécurité « Fail Safe », en cas de rupture de l'un d'eux. D'une manière plus générale, le système d'axe comprend un unique axe, de préférence cylindrique de section circulaire, ou bien une pluralité d'axes concentriques, également cylindriques de sections circulaires.

Le système d'axe 190 porte trois rotules dont les centres sont alignés sur l'axe longitudinal 191 du système 190, orienté selon la direction Y. Parmi celles-ci, une rotule primaire 192 réalisée à partir d'un premier organe de rotule mâle 192a, glissé autour du système d'axe 190, et d'un second organe de rotule femelle 192b, intégré à une première ferrure 194. Les organes mâle et femelle sont naturellement de formes complémentaires afin de constituer la rotule 192, cette forme correspondant à une sphère tronquée symétriquement par deux plans parallèles entre-eux et orthogonaux à l'axe 191.

L'organe de rotule femelle 192b est soit une pièce rapportée fixement sur la ferrure 194, soit réalisée d'un seul tenant avec celle-ci. Cette même ferrure 194 est quant à elle montée fixement sur la structure rigide 108, par exemple entre deux cadres de nervures 152 directement consécutives. Comme cela est visible sur la figure 7, la première ferrure 194 peut en effet présenter une base en appui et fixée sur le côté inférieur des deux cadres de nervures 152, ainsi que sur la partie du montant inférieur du caisson 150 situé entre les deux nervures. Le montage s'effectue de préférence par boulonnage sur le caisson et les deux nervures concernées, dont la nervure arrière est de préférence celle intégrant la ferrure 157 de l'attache moteur arrière 12.

Il est aussi prévu deux rotules secondaires 196 agencées respectivement de part et d'autre de la rotule primaire 192, selon la direction du système d'axe 190. Chacune d'elles est réalisée à partir d'un premier organe de rotule mâle 196a, glissé autour du système d'axe 190, et d'un second organe de rotule femelle 196b, intégré à l'extrémité arrière de l'une des bielles 14a. Les organes mâle et femelle sont ici aussi de formes complémentaires afin de constituer les rotules 196, cette forme correspondant à une sphère tronquée symétriquement par deux plans parallèles entre-eux et orthogonaux à l'axe 191.

Pour chaque rotule secondaire, l'organe de rotule femelle 196b est soit une pièce rapportée fixement sur l'extrémité arrière de la bielle 14a, soit réalisée d'un seul tenant avec celle-ci.

Dans l'exemple montré sur les figures 6 et 7, les trois organes de rotule mâle 192a, 196a présentent donc chacun un orifice traversant selon la direction Y, permettant de se glisser autour du système d'axe 190. Leur maintien en translation par rapport à ce système 190, selon la direction de l'axe 191, est assuré par la présence de deux douilles 198 faisant partie intégrante du système 190, qui plaquent ces organes 192a, 196a les uns contre les autres. Ces derniers sont d'ailleurs de préférence directement en appui les uns sur les autres, comme montré sur la figure 6.

Les douilles 198 sont quant à elles maintenues pour l'une d'elles par la tête du système d'axe, et pour l'autre par l'écrou de ce système, agencé à l'opposé de la tête.

En outre, le dispositif 14 présente des moyens de secours permettant d'assurer la transmission des efforts en cas de défaillance. Ces moyens comprennent deux secondes ferrures 199 montées fixement sur la structure rigide 108, de préférence sur le montant inférieur du caisson 150. Les deux secondes ferrures 199 sont localisées aux extrémités latérales du dispositif 14, de sorte que chaque rotule secondaire 196 se trouve agencée entre l'une de ces secondes ferrures 196, et la rotule primaire 192, selon la direction du système d'axe. De plus, chaque seconde ferrure 196 est traversée avec jeu par le système d'axe 190, au niveau des douilles de blocage 198. Comme on peut le voir sur la figure 6, les deux ferrures 196 s'étendent dans des plans XZ, tout comme la première ferrure 194 située entre celles-ci.

Ainsi, en configuration normale de vol, les efforts moteurs transitent successivement par les deux bielles 14a, les deux rotules secondaires 196, le système d'axe 190, la rotule primaire 192, la première ferrure 194, et la structure rigide 108 du mât d'accrochage. Le système d'axe 190 peut alors légèrement osciller selon le centre de la rotule primaire 192, de préférence dans le plan des bielles, du fait de l'équilibrage permanent des efforts passant par les deux bielles. Néanmoins, le dispositif 14 est conçu de sorte que les oscillations du système d'axe soient d'amplitude suffisamment faible pour qu'il ne vienne pas buter contre les secondes ferrures 199, par lesquelles aucun effort ne transite en conditions normales de vol.

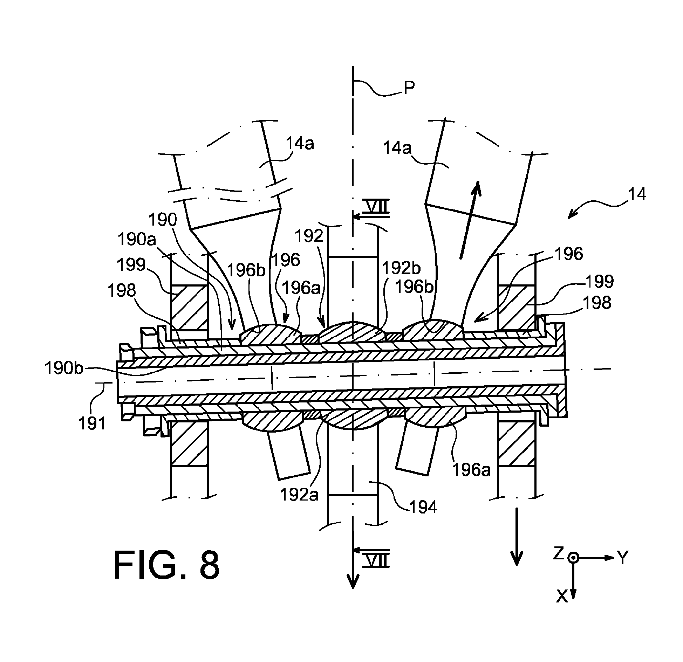

En revanche, en cas de défaillance accidentelle survenant sur le chemin d'efforts entre l'une des bielles 14a et le système d'axe 190, comme par exemple la rupture de la bielle de gauche sur la figure 8, les efforts de poussée ne transitent plus que par l'autre bielle, celle de droite. Cela conduit dans un premier temps à ne solliciter le système d'axe 190 que par la bielle de droite, ce qui engendre la rotation du système 190 autour du centre de la rotule primaire 192, jusqu'à ce le jeu initial entre le système d'axe 190 et la seconde ferrure 199, associée à la bielle active, ait été entièrement consommé.

Après l'obtention quasi-instantanée de la butée entre ces éléments, les efforts moteurs transitent successivement par la bielle 14a non-défaillante, le système d'axe 190, les deux rotules primaire 192 et secondaire 196, les deux ferrures 194, 199, et la structure rigide 108 du mât d'accrochage. La fonction de sécurité, dite « Fail Safe », est donc parfaitement assurée.

Bien entendu, diverses modifications peuvent être apportées par l'homme du métier à l'invention qui vient d'être décrite, uniquement à titre d'exemples non limitatifs. A cet égard, on peut notamment indiquer qui si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure, voire en partie arrière du fuselage.

## Revendications

1. Dispositif de reprise des efforts de poussée (14) pour mât d'accrochage (4) de moteur d'aéronef, ledit dispositif comprenant une première ferrure (194) destinée à être solidaire d'une structure rigide (108) du mât d'accrochage, ainsi que deux bielles latérales (14a) de reprise des efforts de poussée,
**caractérisé en ce qu'**il comprend en outre un système d'axe (190) portant trois premiers organes mâles de rotule (192a, 196a, 196a) agencés le long de celui-ci et appartenant respectivement à une rotule primaire (192) et deux rotules secondaires (196, 196) agencées de part et d'autre de ladite rotule primaire, lesdits premiers organes mâles étant glissés autour du système d'axe (190), ladite première ferrure (194) intégrant un second organe femelle de rotule (192b) coopérant avec ledit premier organe (192a) de ladite rotule primaire (192), et une extrémité de chacune des deux bielles (14a) intégrant un second organe femelle de rotule (196b, 196b) coopérant respectivement avec lesdits premiers organes (196a, 196a) des deux rotules secondaires (196, 196).

2. Dispositif selon la revendication 1, **caractérisé en ce que** les centres des rotules primaire et secondaires (192, 196, 196) sont alignés.

3. Dispositif selon l'une quelconque des revendications précédentes, **caractérisé en ce qu'**il comprend deux secondes ferrures (199, 199) destinées à être solidaires de la structure rigide (108) du mât d'accrochage, les secondes ferrures étant agencées de sorte que chaque rotule secondaire (196) se trouve agencée entre l'une de ces secondes ferrures (199) et la rotule primaire (192), selon la direction du système d'axe (190), et **en ce que** chaque seconde ferrure (199) est traversée avec jeu par ledit système d'axe (190).

4. Dispositif selon l'une quelconque des revendications précédentes, **caractérisé en ce que** l'autre extrémité des bielles latérales (14a) de reprise des efforts de poussée est destinée à être raccordée au moteur.

5. Mât d'accrochage (4) de moteur d'aéronef comprenant une structure rigide (108) ainsi qu'un dispositif de reprise des efforts de poussée (14) selon l'une quelconque des revendications précédentes.

6. Ensemble moteur (1) pour aéronef comprenant un mât d'accrochage de moteur selon la revendication 5, ainsi qu'un moteur (6) fixé sur ledit mât.

7. Aéronef comprenant au moins un ensemble moteur (1) selon la revendication 6.

## Patentansprüche

1. Vorrichtung zur Aufnahme von Schubkräften (14) für ein Aufhängesystem (4) eines Luftfahrzeugtriebwerks, wobei die Vorrichtung einen ersten Beschlag (194), der mit einer starren Struktur (108) des Aufhängesystems formschlüssig verbunden ist, sowie zwei Seitenstangen (14a) zur Aufnahme von Schubkräften umfasst,
**dadurch gekennzeichnet, dass** sie ferner ein Achsensystem (190) aufweist, das drei erste männliche Rollgelenkorgane (192a, 196a, 196a) aufweist, die sich längs diesem befinden und zu einem Primärrollgelenk (192) bzw. zwei Sekundärrollgelenken (196, 196), die sich auf der einen bzw. der anderen Seite des Primärrollgelenks befinden, gehören, wobei die ersten männlichen Organe um das Achsensystem (190) gleitend sind, wobei der erste Beschlag (194) ein zweites weibliches Rollgelenkorgan (192b) integriert aufweist, das mit dem ersten Organ (192a) des Primärrollgelenks (192) zusammenwirkt, und wobei ein Ende von jeder der beiden Stangen (14a) ein zweites weibliches Rollgelenkorgan (196b, 196b) integriert aufweist, das jeweils mit den ersten Organen (196a, 196a) der beiden Sekundärrollgelenke (196, 196) zusammenwirkt.

2. Vorrichtung nach Anspruch 1, **dadurch gekennzeichnet, dass** die Zentren der Primär- und Sekundärrollgelenke (192, 196, 196) fluchtend ausgerichtet sind.

3. Vorrichtung nach einem der vorhergehenden Ansprüche, **dadurch gekennzeichnet, dass** sie zwei zweite Beschläge (199, 199) aufweist, die formschlüssig mit der starren Struktur (108) des Aufhängesystems verbunden sind, wobei die zweiten Beschläge derart angeordnet sind, dass sich jedes Sekundärrollgelenk (196) zwischen dem einen dieser zweiten Beschläge (199) und dem Primärrollgelenk (192) in Richtung des Achsensystem (190) befindet und dass das Achsensystem (190) mit einem Spiel durch jeden zweiten Beschlag (199) hindurchgeht.

4. Vorrichtung nach einem der vorhergehenden Ansprüche, **dadurch gekennzeichnet, dass** das andere Ende der Seitenstangen (14a) zur Aufnahme von Schubkräften an dem Triebwerk befestigt ist.

5. Aufhängesystem (4) für ein Luftfahrzeugtriebwerk, das eine starre Struktur (108) sowie eine Vorrichtung zur Aufnahme von Schubkräften (14) nach einem der vorhergehenden Ansprüche umfasst.

6. Triebwerksystem (1) für ein Luftfahrzeug, das ein Aufhängesystem für ein Triebwerk nach Anspruch 5 sowie ein an dem Aufhängesystem befestigtes Triebwerk (6) umfasst.

7. Luftfahrzeug, das mindestens ein Triebwerksystem (1) nach Anspruch 6 umfasst.

## Claims

1. A take-up device (14) for thrust forces for an aircraft engine attachment pylon (4), said device comprising a first fitting (194) intended to be secured to a rigid structure (108) of the attachment pylon, as well as two lateral connecting rods (14a) for take-up of thrust forces,
**characterized in that** it also comprises an axis system (190) bearing three first male ball joint organs (192a, 196a, 196a) arranged along the latter and belonging respectively to a primary ball joint (192) and two secondary ball joints (196, 196) arranged on either side of the primary ball joint, said first male ball joint organs being slid around said axis system (190) said first fitting (194) integrating a second female ball joint organ (192b) cooperating with said first organ (192a) of the primary ball joint (192), and an end of each of the two connecting rods (14a) integrating a second female ball joint organ (196b, 196b) cooperating respectively with the first organs (196a, 196b) of the two secondary ball joints (196, 196).

2. The device according to claim 1 or claim 1 [sic], **characterized in that** the centers of the primary and secondary ball joints (192, 196, 196) are aligned.

3. The device according to any preceeding claims, **characterized in that** it comprises two second fittings (199, 199) intended to be secured to the rigid structure (108) of the attachment pylon, the second fittings being arranged so that each secondary ball joint (196) is arranged between one of these second fittings (199) and the primary ball joint (192), in the direction of the axis system (190), and each second fitting (199) is passed through with play by said axis system (190).

4. The device according to any preceeding claims, **characterized in that** the other end of the lateral connecting rods (14a) for taking up of thrust forces is intended to be connected to the engine.

5. An aircraft engine attachment pylon (4) comprising a rigid structure (108) as well as a take-up device (14) for thrust forces according to any preceeding claims.

6. The aircraft engine assembly (1) comprising an engine attachment pylon according to claim 5, as well as an engine (6) fastened on said pylon.

7. An aircraft comprising at least one engine assembly (1) according to claim 6.
